**Europäisches Patentamt**

**European Patent Office**

**Office européen des brevets**

(19)

(11) Veröffentlichungsnummer: **0 196 013**
**A2**

(12) # EUROPÄISCHE PATENTANMELDUNG

(21) Anmeldenummer: **86103759.6**

(22) Anmeldetag: **19.03.86**

(51) Int. Cl.⁴: **C 08 L 25/00, C 08 L 51/04, C 08 L 51/00**

(30) Priorität: **26.03.85 DE 3510877**

(43) Veröffentlichungstag der Anmeldung: **01.10.86**
**Patentblatt 86/40**

(84) Benannte Vertragsstaaten: **BE DE FR GB NL**

(71) Anmelder: **BASF Aktiengesellschaft,**
**Carl-Bosch-Strasse 38, D-6700 Ludwigshafen (DE)**

(72) Erfinder: **Hoenl, Hans, Dr., Hauptstrasse 69a,**
**D-6719 Obersuelzen (DE)**
Erfinder: **Echte, Adolf, Dr., Leuschnerstrasse 42,**
**D-6700 Ludwigshafen (DE)**

(54) **Schlagfeste und transluzente Formmasse.**

(57) Die Erfindung betrifft eine schlagfeste und transluzente thermoplastische Formmassen enthaltend, jeweils bezogen auf die Formmasse aus A+B,

A eine Hartmatrix aus einem Polymeren eines Monovinylaromaten und
B eine darin verteilte Weichphase.

Die Weichphase besteht aus Tropfenteilchen, wobei die mittlere Teilchengröße der Tropfenteilchen zu mehr als 80% (Zahlenmittel) im Bereich von 0,01 bis 0,3 μm liegt. Die Weichphase wird hergestellt durch eine an sich bekannte radikalische Polymerisation des die Hartmatrix A aufbauenden monovinylaromatischen Monomeren in Gegenwart einer Mischung von

$b_1$) Homopolybutadien und
$b_2$) einem linearen Monovinylaromat-Butadien-Zweiblock-Copolymerisat,

das, bezogen auf $b_2$, 10 bis 60 Gew.% Butadien einpolymerisiert enthält. Der Anteil an Polybutadien aus $b_1$) beträgt 10 bis 50 Gew.%, bezogen auf Gesamtpolybutadienwerte von 4 bis 12 Gew.% der gesamten Formmasse.
Die Formmasse wird vorteilhaft zur Herstellung von geformten Gebilden verwendet.

BASF Aktiengesellschaft                                              O.Z. 0050/37654

0196013

Schlagfeste und transluzente Formmasse

Die Erfindung betrifft eine transluzente und schlagfeste Formmasse. Sie ist aufgebaut aus einer Hartmatrix aus dem Polymeren eines Monovinylaromaten mit einem Anteil von 60 bis 95 Gew.%, bezogen auf die Formmasse. In dieser Formmasse ist eine Weichphase verteilt in einem Anteil von 5 bis 40 Gew.%, bezogen auf die Formmasse, die eine mittlere Teilchengröße im Bereich von 0,01 bis 0,30 $\mu$m aufweist. Diese Weichphase stellt ein Pfropfmischpolymerisat aus dem oder den Monomeren der Hartmatrix und einem elastomeren, Butadien enthaltenden Polymerisat dar.

Zum Stand der Technik nennen wir:

(1) A. Echte; Ang. Makr. Chem. 58/59. 175 (1977)
(2) P 33 45 377.2 und
(3) P 34 09 656.6

In (1) wird die Morphologie von schlagfestem, d.h. kautschukmodifiziertem Polystyrol behandelt. Demnach ist die Domänenstruktur der Kautschukphase unmittelbar vor der Phaseninversion für die Ausbildung des jeweiligen Teilchentyps entscheidend. Die Domänenstruktur selbst ist wiederum von der Zusammensetzung der Weichkomponente abhängig, d.h. entscheidend für die Morphologie ist der Anteil an Block-Polystyrol und/oder an auf gepfropftem Polystyrol unmittelbar vor der Phaseninversion. Die verschiedenen Kautschukpartikeltypen werden klassifiziert als Zellenteilchen, Knäuelteilchen, Kapselteilchen, Fadenteilchen und Tropfenteilchen. Der letztgenannte Teilchentyp entsteht, wenn der Polystyrolgehalt der Weichkomponente zum Zeitpunkt der Phaseninversion größer ist als 85 Gew.%. Dies kann realisiert werden, indem entweder Styrol-Butadien-Zwei-Blockcopolymere mit entsprechend hohem Styrolgehalt eingesetzt werden oder indem die Pfropfung auf die Weichkomponente unter sehr effizienten Bedingungen durchgeführt wird. Am geeignetsten ist der Einsatz von Styrol-Butadien-Zwei-Blockcopolymeren mit einem Styrolgehalt von über 70 Gew.%. Dieser Kautschuk wird in Styrol gelöst. Anschließend führt man eine thermische oder radikalisch initiierte Polymerisation dieser Lösung durch, wobei Polystyrol noch zusätzlich auf das Zwei-Blockcopolymere aufgepfropft wird. Es resultiert ein hochglänzendes transluzentes schlagfestes Polystyrol mit Tropfenteilchen-Morphologie.

Nachteilig ist bei der in (1) beschriebenen Art, zu hochglänzendem, transluzentem und schlagfestem Polystyrol zu gelangen, die Tatsache, daß verhältnismäßig große Mengen des Styrol-Butadien-Zwei-Blockcopolymeren eingesetzt werden müssen, um eine ausreichende Schlagfestigkeit des Produktes zu gewährleisten. Denn für die Schlagfestigkeit ist u.a. der An-Vo/P teil an Polybutadien - frei oder chemisch gebunden - im Endprodukt ausschlaggebend. Um z.B. 9 Gew.% Polybutadien im Endprodukt zu erhalten,
müssen 30 Gew.% eines 70 Gew.% Styrol enthaltenden Styrol-Butadien-Zwei-
Blockcopolymeren eingesetzt werden. Dies führt zu einer entsprechenden
Verteuerung der gewünschten Formmassen.

In (2) sind Formmassen, die eine andere Morphologie aufweisen, beschrieben. Schließlich ist aus (3) ein Verfahren zur Herstellung von schlagfestem Polystyrol unter Verwendung von Kautschukmischungen aus Polybutadien und Blockkautschuken bekannt.

Es bestand daher die Aufgabe, transluzentes und schlagfestes Polystyrol
mit Tropfenteilchen-Morphologie herzustellen, das möglichst wenig Styrol-
Butadien-Zwei-Blockcopolymeres enthält und dennoch mechanisch hochwertig
ist.

Diese Aufgabe wird gelöst durch eine Formmasse gemäß Patentanspruch 1.

Die Erfindung betrifft daher schlagfeste und transluzente thermoplastische Formmassen enthaltend, jeweils bezogen auf die Formmasse aus A+B,

A)  eine Hartmatrix aus mindestens einem Polymeren eines Monovinylaromaten in einem Anteil von 60 bis 95 Gew.% und
B)  eine darin verteilte Weichphase in einem Anteil von 5 bis 40 Gew.%,

die aus Tropfenteilchen besteht, wobei die mittlere Teilchengröße der
Tropfenteilchen zu mehr als 80 % (Zahlenmittel) im Bereich von 0,01 bis
0,3 $\mu$m liegt, und wobei die Weichphase mindestens ein Pfropfmischpolymerisat aus dem das Polymere der Hartmatrix aufbauenden Monomeren und
einem elastomeren, Butadien enthaltenden, Polymerisat herstellt, dadurch
gekennzeichnet, daß die Weichphase hergestellt worden ist, durch eine an
sich bekannte radikalische Polymerisation des die Hartmatrix A aufbauenden monovinylaromatischen Monomeren in Gegenwart einer Mischung von

$b_1$) Homopolybutadien und
$b_2$) einem linearen Monovinylaromat-Butadien-Zweiblock-Copolymerisat,

das, bezogen auf $b_2$, 10 bis 60 Gew.% Butadien einpolymerisiert enthält,
und wobei der Anteil an Polybutadien aus $b_1$) 10 bis 50 Gew.%, bezogen auf
Gesamtpolybutadienwerte von 4 bis 12 Gew.% der gesamten Formmasse, beträgt.

Nachstehend werden die am Aufbau der erfindungsgemäßen Formmasse beteiligten Komponenten, d.h. insbesondere die Morphologie der erfindungsgemäßen Formmasse, sowie das Verfahren zu deren Herstellung und die dafür erforderlichen Ausgangsstoffe und Hilfsmittel beschrieben.

Komponente A

Die erfindungsgemäße Formmasse ist aus einer Hartmatrix aus dem Polymeren eines monovinylaromatischen Monomeren aufgebaut. Diese Hartmatrix macht, bezogen auf die Formmasse, aus den Komponenten A+B, 60 bis 95 Gew.% vorzugsweise 70 bis 90 Gew.% aus. Als vinylaromatisches Monomeres zum Aufbau der Hartmatrix kommt insbesondere Styrol in Frage. Es können jedoch auch $\alpha$-Methylstyrol oder p-Methylstyrol oder Mischungen substituierter Styrole verwendet werden; bevorzugt ist jedoch die ausschließliche Verwendung von Styrol, so daß die Hartmatrix bevorzugt aus Polystyrol besteht.

Die Hartmatrix entsteht in an sich bekannter Weise bei der Herstellung der Formmasse dadurch, daß die Komponente B, d.h. die dieser zugrundeliegenden Kautschuke, nämlich Polybutadien und Zweiblockcopolymerisat in Gegenwart des die Hartmatrix später aufbauenden Monomeren radikalisch initiiert polymerisiert wird. Dabei bilden sich die Pfropfmischpolymerisate der Kautschuke (Weichphase) und der ungepfropfte Teil, die Hartmatrix. Die Hartmatrix kann Viskositätszahlen im Bereich von 50 bis 140, insbesondere im Bereich von 70 bis 120, aufweisen. Dies entspricht mitt-leren Molgewichten ($\overline{M}_w$) im Bereich von 100.000 bis 350.000, insbesondere 150.000 bis 300.000.

Komponente B

Die erfindungsgemäße Formmasse weist als Komponente B eine Weichphase auf, die fein dispergiert in der Hartmatrix vorliegt. Die Art und Weise, wie eine Weichphase in einer Hartmatrix dispergiert werden kann, ist dem Fachmann geläufig. Die Weichphase ist in einem Anteil von 5 bis 40 Gew.%, vorzugsweise von 10 bis 30 Gew.%, in der Hartmatrix vorhanden. Außerdem weist diese Weichphase eine mittlere Teilchengröße im Bereich von 0,01 bis 0,30$\mu$m, vorzugsweise im Bereich von 0,02 bis 0,20$\mu$m auf. Bei dem ge-nannten Teilchengrößenbereich handelt es sich um die mittlere Teilchengröße, bestimmt durch Auszählen einer Elmi-Aufnahme (Zahlenmittel).

Bei der Weichphase handelt es sich um ein Pfropfmischpolymerisat aus dem(n) Monomeren der Hartmatrix, d.h. insbesondere von Styrol, auf ein Gemisch aus einem elastomeren Styrol-Butadien-Zwei-Blockcopolymeren A-B und Polybutadien.

b1)

Als eine die Weichphase aufbauende Komponente ist Polybutadien bzw. dessen Pfropfmischpolymerisat mit vorzugsweise Styrol zu nennen. Als Grundlage der Pfropfung sind Polybutadiene geeignet vom medium- oder high-cis-Typ mit Molekulargewichten im Bereich von 70.000 bis 450.000 (Gewichtsmittel) vorzugsweise werden medium-cis-Polybutadiene mit Molgewichten von 300.000 bis 400.000 eingesetzt.

Der Gesamtpolybutadienanteil ist die Summe des aus der Komponente $b_1$) und $b_2$) stammenden Polybutadiens. Der Anteil der Komponente $b_1$ an der Weichphase beträgt 10 bis 50 Gew.%, vorzugsweise 15 bis 40 Gew.%, bezogen auf Gesamtpolybutadienwerte von 4 bis 12 %, vorzugsweise 6 bis 10 %.

$b_2$)
Als weitere, die Weichphase aufbauende Komponente fungiert ein Zweiblockcopolymerisat A-B bzw. dessen Pfropfmischpolymerisat mit Styrol.

Als elastomeres Zwei-Blockcopolymerisat A-B im Sinne der vorliegenden Erfindung wird ein solches verstanden, das durch anionische Polymerisation mit Hilfe von Lithiuminitiatoren hergestellt worden ist. Als vinylaromatische Monomere zum Aufbau des Blockes A kommen Styrol und substituierte Styrole in Betracht. Genannt seien Styrol, das bevorzugt alleine verwendet wird, o-, m- und p-Methylstyrol. Der Block B des Blockcopolymerisats ist vorzugsweise nur aus Butadien aufgebaut.

Das Zweiblockcopolymerisat weist einen Blockpolystyrolgehalt von 40 bis 90 Gew.%, bezogen auf das Blockcopolymerisat, auf (Rest jeweils Butadien). Es handelt sich bei dem genannten Blockcopolymerisat um ein solches mit sogenanntem scharfem Übergang. Dem Fachmann ist z.B. aus (1) bekannt, wie er derartige Blockcopolymerisate herstellen kann. Dieses Blockcopolymerisat soll ein mittleres Molekulargewicht ($\overline{M}_w$) von 100.000 bis 300.000, vorzugsweise von 150.000 bis 250.000, aufweisen.

Der Anteil der Komponente $b_2$) an der Weichphase beträgt 90 bis 50 Gew.%, vorzugsweise 85 bis 60 Gew.%, bezogen auf Gesamtpolybutadienwerte von 4 bis 12 %. Der Gesamtpolybutadienanteil berechnet sich aus dem Anteil des Polybutadiens und aus dem Butadienanteil der in dem Zwei-Blockcopolymerisat enthalten ist.

Um dies zu verdeutlichen, sei ein Beispiel angeführt. Eine Mischung aus 8 Gew.% Styrol-Butadienblockcopolymerisat mit einem Butadiengehalt von 50 Gew.% und 6 Gew.% Homo-Polybutadien wurde angewendet. Der Gesamtpolybutadienanteil beträgt dann 8 · 0,5 = 4 Gew.% Polybutadien aus dem Zwei-Blockcopolymerisat und 6 Gew.% aus dem Homopolymerisat des Butadiens, so daß der Gesamtpolybutadienanteil 10 Gew.% ausmacht. Der Anteil des Homo-Polybutadiens am Gesamtpolybutadien ist 6/10 · 100 = 60 %. Soweit die Erläuterung des Gesamtpolybutadiengehalts, wie sie erfindungsgemäß zu verstehen ist.

Der Gesamtpolybutadiengehalt liegt dabei im Bereich von 4 bis 12 Gew.%, bezogen auf die Formmasse.

Die erfindungsgemäße Formmasse hebt sich durch eine besondere Morphologie von bekannten Formmassen ab. So zeigt die erfindungsgemäße Formmasse eine dispergierte Weichphase, die mehr als 80 %, vorzugsweise mehr als 90 % (Zahlenmittel) Tropfenteilchen, feststellbar auf einer Elmi-Aufnahme, aufweist. Es handelt sich bei den Tropfenteilchen um kugelförmige oder leicht elliptische Teilchen, die kein eingeschlossenes (okkludiertes) Polystyrol enthalten. Sie sind vollständig mit Kautschuk aufgefüllt. Unter Tropfenteilchen im Sinne der vorliegenden Erfindung werden Teilchen im Größenbereich von 0,01 bis 0,30 $\mu$m, vorzugsweise von 0,2 bis 0,20 $\mu$m, verstanden.

<u>Aufbau der erfindungsgemäßen Formmasse</u>

Die Herstellung der erfindungsgemäßen Formmasse erfolgt durch Polymerisation des die Hartmatrix aufbauenden Monomeren, d.h. insbesondere von Styrol in Gegenwart des beschriebenen Gemisches aus Zwei-Blockcopolymeren und aus Polybutadien. Die Polymerisation wird dabei vorzugsweise unter Verwendung der üblichen Initiatoren durchgeführt. Sie kann kontinuierlich oder diskontinuierlich durchgeführt werden, wobei die diskontinuierliche Verfahrensführung bevorzugt ist. Bevorzugt ist ferner die Durchführung in einem Zweistufenverfahren, wobei die erste Verfahrensstufe in Masse, gegebenenfalls unter Verwendung eines Lösungsmittels erfolgt und die zweite Stufe in Suspension durchgeführt wird. Verfahren zur kontinuierlichen Durchführung sind in der DE-AS 17 70 392 (Rührkessel-Turmkaskade) hinreichend beschrieben, so daß der Verweis auf diese Druckschrift genügen mag. Ein diskontinuierliches Verfahren zur Herstellung von transluzentem, schlagfestem Polystyrol ist in der DE-AS 26 13 352 beschrieben, so daß der Fachmann darauf zurückgreifen kann.

Bei dem bevorzugten diskontinuierlichen Verfahren, das in der ersten Stufe in Masse oder Lösung durchgeführt wird, hat der Fachmann in dieser 1. Verfahrensstufe die erforderliche Teilchengröße einzustellen. Diese erfolgt mit Hilfe von Scherkräften, in der dem Fachmann bekannten Weise. Die Temperaturen in der ersten Verfahrensstufe liegen im Bereich von 50$^{0}$C bis 200$^{0}$C, in der nachfolgenden 2. Verfahrensstufe, die bevorzugt in Suspension durchgeführt wird, werden dem Reaktionsansatz Wasser und die üblichen wasserlöslichen Suspensionsmittel zugesetzt. Als solche kommen insbesondere in Betracht: Methylcellulose, Oxypropylcellulose, Polyvinylalkohol, Polyvinylpyrrolidon usw.

Bei der Pfropfmisch-Polymerisation des Gemisches aus Zwei-Blockcopolymeren und Polybutadien in Gegenwart des die spätere Hartmatrix (Polystyrol) bildenden vinylaromatischen Monomeren wird zunächst das Kautschukgemisch in dem Monomeren, gegebenenfalls unter Zuhilfenahme eines
Lösungsmittels, polymerisiert. Dabei erfolgt eine Pfropfung des die Hartmatrix bildenden Monomeren auf das Kautschukgemisch. Die Weichphase B
umfaßt somit neben dem Styrolanteil des Blockkautschuks auch diesen durch
Pfropfung erzeugten Polystyrolanteil, so daß diese Weichphase ein kompliziertes Gebilde darstellt. Dem Fachmann ist bekannt, daß er die Polymerisation je nach Verfahrensführung zu unterschiedlichen Umsätzen bzw. Feststoffgehalten führen kann. Die Festlegung der Umsätze in den einzelnen
Reaktoren der bekannten Verfahren und damit auch der Feststoffgehalte
wird von ihm anhand weniger Versuche festzustellen sein, um optimale Produkte zu erhalten. Hierbei kann er sich bezüglich des diskontinuierlichen
Verfahrens an die DE-AS 26 13 352 und bezüglich der kontinuierlichen Verfahrensweise an die DE-AS 17 70 392 halten. Dies gilt auch in bezug auf
die Aufarbeitung der bei der Polymerisation anfallenden Verfahrensprodukte, die vom Fachmann unter Anlehnung an die bekannten Verfahren durchgeführt werden kann.

Für die Herstellung der Formmasse der vorliegenden Erfindung können auch
die bekannten Hilfsmittel, wie Mineralöle, Molekulargewichtsregler, Antioxidantien usw. verwendet werden. Als Hilfsmittel seien ferner genannt
Gleitmittel, wie Zinkstearat und andere Stearate bzw. andere übliche
Hilfsmittel. Auch für die Verarbeitung der erhaltenen Reaktionsprodukte
kann der Fachmann die bekannten Zusatzstoffe verwenden. Als solche seien
genannt für die Herstellung von Formteilen aus der Formmasse: Farbstoffe,
Antioxidantien, Stabilisatoren, eventuell Flammschutzmittel in den dem
Fachmann geläufigen Mengen.

Die in den Beispielen und Vergleichsversuchen beschriebenen Parameter
wurden wie folgt bestimmt:

1. Lochkerbschlagzähigkeit $a_{KL}$ in $kJ/m^2$ nach DIN 53 753
2. Reißdehnung RD in % nach DIN 53 455
3. Streckspannung ST in $N/mm^2$ nach DIN 53 455
4. Vicattemperatur VT in $^0C$ nach DIN 53 460
5. Transluzenz TL
   Zur Bewertung der Transluzenz der beim erfindungsgemäßen Verfahren
   erhaltenen Produkte werden zunächst eine Skala erstellt. Diese Skala umfaßt die Werte 1 bis 9 in der folgenden Tabelle 1, wobei die niedrigeren Werte eine gute Transluzenz repräsentieren. Um die in der Tabelle 1 angeführten Werte zu erzielen, wurde ein handelsübliches schlagfestes Polystyrol (Produkt A), das 15 Gew.% eines Styrol-Butadien-Blockkautschuks mit Kapselteilchenmorphologie (Typ Buna BL 6533) mit 60 Gew.% Butadien enthielt, zugrundegelegt (Benotung 4). Abmischungen dieses Produkts A in den in der Tabelle 1 genannten Gewichtsverhältnissen mit Standardpolystyrol der VZ 96 [ml/g] ergaben die Werte von 3 bis 1 für die Transluzenz. Durch Abmischung des Produktes A mit einem schlagfesten Polystyrol mit Zellenteilchenmorphologie (Produkt B: Polystyrol 476 L der BASF; Handelsprodukt; thermisch hergestellt), das 8 Gew.% Polybutadien enthält, wurden höhere Werte der Transluzenz erzielt; vgl. die Werte 5 bis 9 in der Tabelle.

Von Proben der erfindungsgemäßen Produkte der Beispiele und der Vergleichsversuche wurden Preßplättchen hergestellt und visuell mit den entsprechenden Preßplättchen des Standards der Skala verglichen.

Tabelle 1

| Note für die Transluzenz | Produkt A | Abmischung in Gew.-Teilchen Standardpolystyrol | Produkt B |
|---|---|---|---|
| 1 | 20 | 80 | 0 |
| 2 | 40 | 60 | 0 |
| 3 | 60 | 40 | 0 |
| 4 | 100 | 0 | 0 |
| 5 | 96 | 0 | 4 |
| 6 | 92 | 0 | 8 |
| 7 | 88 | 0 | 12 |
| 8 | 84 | 0 | 16 |
| 9 | 80 | 0 | 20 |

Demnach sind Produkte mit Transluzenz-Noten kleiner oder gleich 4 als transluzent zu betrachten.

6. Von den Proben der Beispiele und Versuche wurden in bekannter Weise elektronenmikroskopische Dünnschichtaufnahmen angefertigt, die zur Bestimmung der Teilchengröße, Verteilung und Zahlenmittel der Weichphase dienen.

7. Die Bestimmung des Viskositätszahl, VZ, der Hartmatrix erfolgt analog DIN 53 726  0,5 g Material in 100 ml Toluol bei 25°C rel. Viskosität messen.

Die Erfindung wird nachstehend anhand von Beispielen und Vergleichsversuchen näher erläutert. Alle darin angegebenen Teile und Prozente beziehen sich, sofern nichts anderes vermerkt ist, auf das Gewicht.

Beispiele 1 bis 5

Den in der Tabelle 2 angegebenen Mengen an Styrol und Elastomeren (Polybutadien und Styrol-Butadien-Zwei-Blockcopolymerisat) wurden jeweils noch 2,3 Gew.% eines medizinischen Weißöls zugesetzt [Summe $a_1$) bis $a_3$) = 100]. Außerdem wurden dem Reaktionsansatz zusätzlich noch 0,12 Teile eines sterisch gehinderten Phenoles als Stabilisator (®Irganox 1076), 0,10 Teile Dibenzoylperoxid und 0,08 Teile t.-Dodecylmercaptan als Kettenregler zugefügt.

In einem mit einem Anker-Rührer ausgestatteten Kessel mit einem Fassungsvermögen von 5 Litern wurden die in der Tabelle 1 genannten Ausgangsmischungen jeweils bei 86°C isotherm und bei 200 Rührerumdrehungen/Minute bis zu einem Umsatz von 35 Gew.%, bezogen auf Styrol, d.h. in Masse, polymerisiert. Danach wird in wäßriger Suspension weiterpolymerisiert. Hierzu werden 0,1 Teile Dicumylperoxid und pro Kilogramm des Ansatzes 900 ml Wasser, 9,0 g eines Suspensionshilfsmittels auf Basis von Ethylenoxid (®Luviskol K 90) und 1,8 g Natriumphosphat zugegeben. In Suspension wurde bei einem Füllgrad von 90 % bei 300 Rührerumdrehungen/Minute jeweils isotherm 3 Stunden bei 110°C, 3 Stunden bei 130°C und 4 Stunden bei 140°C bis zu einem Umsatz von 100 %, bezogen auf Styrol, polymerisiert. Die dabei erhaltenen Produkte besaßen eines in Polystyrol als Hartmatrix eingebettete feinverteilte Weichphase aus gepfropftem Polystyrol auf die Mischung der Elastomeren mit Tropfenteilchenmorphologie.

Vergleichsversuche 1 und 2

Die Vergleichsversuche wurden, wie vorstehend in den Beispielen beschrieben, durchgeführt. Allerdings wurde bei Vergleichsversuch 1 kein Polybutadien zugesetzt. Bei Vergleichsversuch 2 betrug der Anteil an Polybutadien, bezogen auf Gesamt-Polybutadien 60 %.

Beim Vergleich der Eigenschaften der Produkte der Beispiele mit denen der Vergleichsproben zeigt sich überraschenderweise, daß Schlagzähigkeit und Reißdehnung im Bereich von Polybutadien-Anteilen, bezogen auf Gesamt-Polybutadien, von 10 bisw 50 % bei ansonst gleichen anderen Eigenschaften, wie Streckspannung und Wärmeformbeständigkeit, ein Maximum besitzen.

Tabelle 2

| Versuche | Styrol | Poly-butadien | SB-Block-Cop.* | Polybutadien, bezogen auf Gesamt-Poly-butadien | $a_{KL}$ | RD | ST | VT | TL |
|---|---|---|---|---|---|---|---|---|---|
| | (%) | (%) | (%) | (%) | (kJ/m$^2$) | (%) | (N/mm$^2$) | ($^0$C) | |
| Vgl.Vers. 1 | 67,7 | 0 | 30,0 | 0 | 4,8 | 7,9 | 30,8 | 83,1 | 0 |
| Beispiel 1 | 69,8 | 0,9 | 27,0 | 10 | 5,2 | 8,7 | 30,0 | 82,4 | 0 |
| Beispiel 2 | 71,9 | 1,8 | 24,0 | 20 | 5,6 | 11,0 | 29,6 | 81,0 | 1 |
| Beispiel 3 | 74,0 | 2,7 | 21,0 | 30 | 6,3 | 13,0 | 29,1 | 84,3 | 2 |
| Beispiel 4 | 76,1 | 3,6 | 18,0 | 40 | 5,8 | 11,0 | 30,9 | 84,4 | 3 |
| Beispiel 5 | 78,2 | 4,5 | 15,0 | 50 | 5,3 | 9,9 | 28,1 | 83,4 | 4 |
| Vgl.Vers. 2 | 80,3 | 5,4 | 12,0 | 60 | 4,6 | 7,3 | 31,0 | 83,9 | 6 |

* das lineare Styrol-Butadien-Zwei-Blockcopolymerisat enthielt 30 Gew.% Butadien und 70 Gew.% Styrol

Patentansprüche

1. Schlagfeste und transluzente thermoplastische Formmassen enthaltend, jeweils bezogen auf die Formmasse aus A+B,

   A    eine Hartmatrix aus mindestens einem Polymeren eines Monovinylaromaten in einem Anteil von 60 bis 95 Gew.% und

   B    eine darin verteilte Weichphase in einem Anteil von 5 bis 40 Gew.%,

   die aus Tropfenteilchen besteht, wobei die mittlere Teilchengröße der Tropfenteilchen zu mehr als 80 % (Zahlenmittel) im Bereich von 0,01 bis 0,3 $\mu$m liegt, und wobei die Weichphase mindestens ein Pfropfmischpolymerisat aus dem das Polymere der Hartmatrix aufbauenden Monomeren und einem elastomeren, Butadien enthaltenden, Polymerisat darstellt, dadurch gekennzeichnet, daß die Weichphase hergestellt worden ist, durch eine an sich bekannte radikalische Polymerisation des die Hartmatrix A aufbauenden monovinylaromatischen Monomeren in Gegenwart einer Mischung von

   $b_1$)  Homopolybutadien und
   $b_2$)  einem linearen Monovinylaromat-Butadien-Zweiblock-Copolymerisat,

   das, bezogen auf $b_2$, 10 bis 60 Gew.% Butadien einpolymerisiert enthält, und wobei der Anteil an Polybutadien aus $b_1$) 10 bis 50 Gew.%, bezogen auf Gesamtpolybutadienwerte von 4 bis 12 Gew.% der gesamten Formmasse, beträgt.

2. Formmasse bestehend aus den Komponenten A und B.

3. Formmasse nach Anspruch 1, dadurch gekennzeichnet, daß der Anteil an Polybutadien aus $b_1$) 20 bis 40 Gew.%, bezogen auf Gesamtpolybutadien aus $b_1$ + $b_2$, beträgt.

4. Formmasse nach Anspruch 1, dadurch gekennzeichnet, daß das Zwei-Blockcopolymerisat aus Styrol und Butadien aufgebaut ist und einem Polystyrol-Blockanteil von 40 bis 90 Gew.% aufweist, bei einem mitt-leren Molekulargewicht, $\overline{M}_w$, von 100.000 bis 350.000.

5.  Formmasse nach Anspruch 1, <u>dadurch gekennzeichnet</u>, daß das Homopoly-
    butadien vom medium-cis-Typ ist und ein Molekulargewicht von 100.000
    bis 500.000 aufweist.

6.  Verwendung von Formmassen gemäß Anspruch 1 zur Herstellung von geformten Gebilden.

7.  Geformte Gebilde aus Formmassen gemäß Anspruch 1.